# EUROPEAN PATENT APPLICATION

(11) **EP 3 851 215 A1**
(43) Date of publication of application: **21.07.2021**
(21) Application number: 20209962.8
(22) Date of filing: 26.11.2020
(51) Int. Cl.: B09B 3/00, B09B 5/00

(54) **USED PAPER DIAPER PROCESSING METHOD AND APPARATUS**

(30) Priority: 17.01.2020 JP 2020005955
(71) Applicant: Panasonic Corporation, Kadoma-shi Osaka 571-8501 (JP)
(72) Inventor: MATSUDA, Genichiro, Osaka, 540-6207 (JP); KATAOKA, Hidenao, Osaka, 540-6207 (JP); HINO, Naofumi, Osaka, 540-6207 (JP)
(74) Representative: Eisenführ Speiser

(57) **Abstract**

In a processing tank where a processing liquid is stored up to a first water level, first stirring processing that removes water from a used paper diaper is performed to remove the water from the used paper diaper. Then, the processing liquid is stored up to a second water level higher than the first water level, and second stirring processing that separates excrement contained in the used paper diaper from the used paper diaper is performed to separate the excrement from the used paper diaper. After that, dehydration processing is performed.

## Description

### Background of the Invention

### Field of the Invention

The present disclosure relates to a used paper diaper processing method and apparatus that reduces weight by removing water from a superabsorbent polymer contained in a used paper diaper.

More specifically, the present disclosure relates to a used paper diaper processing method and apparatus in which a water absorption function of a superabsorbent polymer that absorbs water contained in excrement is lowered and water is removed by mixing the superabsorbent polymer and a chemical containing divalent metal ions, and in which weight is reduced by dehydration after an amount of water contained in a used paper diaper is lowered.

### Description of the Related Art

Since a used paper diaper contains a large amount of water, when a large amount of used paper diapers is handled in a nursing home etc., weight of the paper diapers may be an issue. For the paper diaper, a surface material sheet that allows water to pass through is used on the inside that comes into contact with a body, and a waterproof material sheet that does not allow water to pass through is used on the outside. Then, pulp and a superabsorbent polymer are filled between the surface material sheet and the waterproof material sheet as a water absorbing agent. The superabsorbent polymer can hold a large amount of water, and once the water has been absorbed by the superabsorbent polymer, it is difficult to remove the water as it is.

Therefore, a used paper diaper processing apparatus has been proposed in which a used paper diaper soaked in water is separated and disassembled into a water-soluble substance and an insoluble substance, and the separated and disassembled water-soluble substance is discharged to a sewage processing facility along with sewage, thereby reducing weight and volume of the paper diaper (see Patent Document 1).

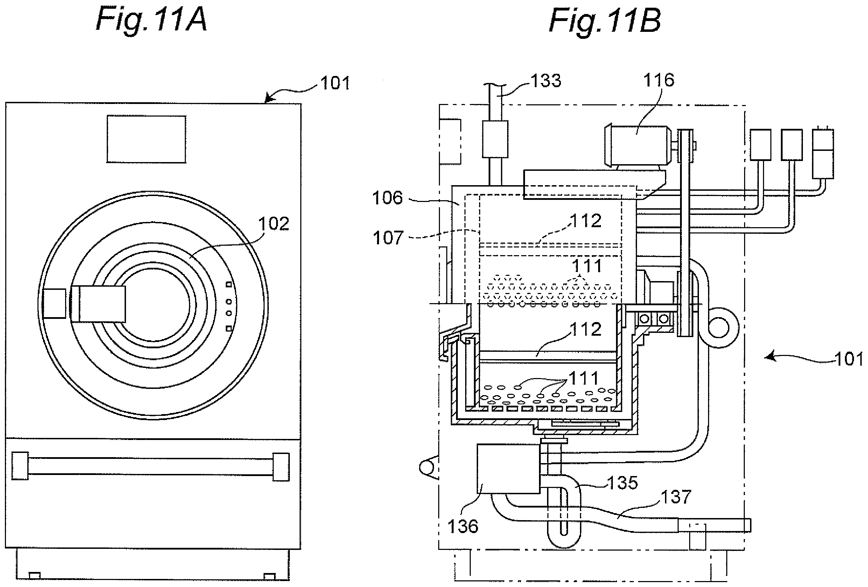

Figs. 11A and 11B show an example of a conventional used paper diaper processing apparatus 101 described in Patent Document 1. Fig. 11A is a front view of the conventional used paper diaper processing apparatus 101. Fig. 11B shows a side view of the processing apparatus 101. In Figs. 11A and 11B, 102 indicates an opening/closing lid, 106 indicates an outer drum, 107 indicates a rotating drum, 111 indicates a through hole, 112 indicates a stirring protrusion, 116 indicates a motor, 133 indicates a water supply pipe, 135 and 137 indicate discharge pipes, and 136 indicates an opening/closing valve.

Next, operation of the conventional used paper diaper processing apparatus 101 will be described.

A used paper diaper is put into the rotating drum 107 through the opening/closing lid 102.

Next, after a predetermined amount of water (that is, an amount by which a lower portion of the rotating drum 107 is immersed) is supplied from the water supply pipe 133 into the outer drum 106, the motor 116 is started to rotate the rotating drum 107, and a water flow is generated inside the rotating drum 107. As a result, the paper diaper in the rotating drum 107 can be separated and disassembled while being immersed in the water. At this time, because of the stirring protrusions 112, stirring processing of the paper diaper is promoted, and separation and dismantling processing is promoted. The separated and dismantled paper diaper passes through the discharge pipes 135 and 137 via the through holes 111 and is drained to a sewer pipe connected to a sewage processing facility.

However, in the used paper diaper processing apparatus 101 described in Patent Document 1, the paper diaper is separated and disassembled in a processing step, and a fiber component of the disassembled paper diaper is directly discharged to the sewage processing facility. Accordingly, there is a problem that a load for processing the fiber component of the disassembled paper diaper increases in wastewater processing in the sewage processing facility. Therefore, upon discharging to the sewer pipe, it is necessary to introduce an apparatus for removing the fiber component of the dismantled paper diaper by a filter.

Therefore, as another processing system, a used paper diaper processing method has been proposed in which water is removed from a superabsorbent polymer by reacting with a chemical containing divalent metal ions, thereby reducing weight of a paper diaper (see Patent Document 2).

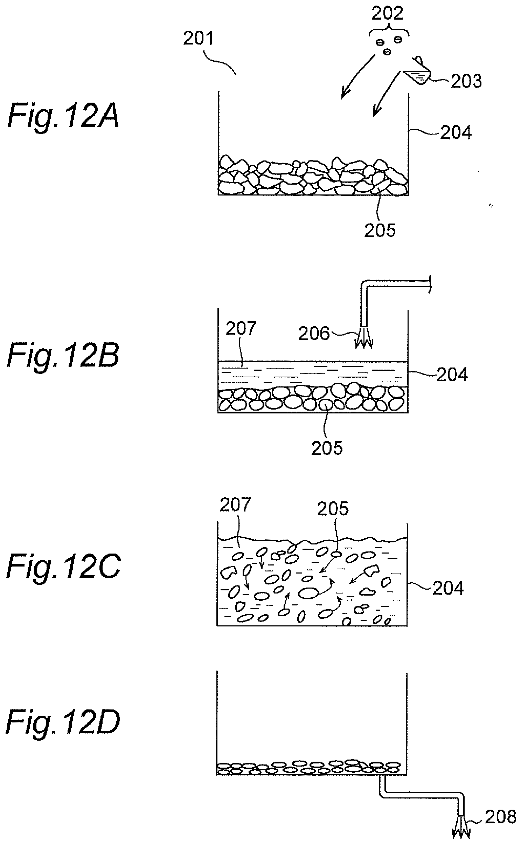

Figs. 12A-12D show an example of a conventional used paper diaper processing apparatus 201 described in Patent Document 2. In Figs. 12A-12D, 202 indicates lime, 203 indicates hypochlorous acid, 204 indicates a processing tank, 205 indicates a used paper diaper, 206 indicates water, 207 indicates a liquid, and 208 indicates wastewater.

Subsequently, operation of the conventional used paper diaper processing apparatus 201 will be described.

First, as shown in Fig. 12A, the lime 202, the hypochlorous acid 203, and the used paper diaper 205 are put into the processing tank 204.

Next, as shown in Figs. 12B and 12C, the water 206 is put into the processing tank 204 so that stirring is possible, and then the stirring is performed for a predetermined time. When the stirring is continued in this state, Ca ions contained in the lime react with the superabsorbent polymer of the paper diaper, and water contained in the superabsorbent polymer is removed.

Finally, as shown in Fig. 12D, the liquid 207 in the processing tank 204 is discharged out of the processing tank 204 and dehydrated, and then the wastewater 208 is discharged.

### Prior Art Documents

### Patent Documents

Patent Document 1: Japanese Patent Laid-open Publication No. 2001-104929

Patent Document 2: Japanese Patent Laid-open Publication No. 2010-84031

However, in the used paper diaper processing apparatus 201 described in Patent Document 2, the lime 202, the hypochlorous acid 203, and the used paper diaper 205 are put into the processing tank 204, and then the water 206 is put into the processing tank 204. At this time, since the outside of the used paper diaper 205 is composed of the waterproof material sheet that does not allow water to pass through, the used paper diaper 205 may float on a surface of the water 206. In that case, even if stirring processing is performed, a processing liquid does not readily penetrate into the superabsorbent polymer inside the used paper diaper 205, so that it is necessary that stirring time for removing the water contained in the superabsorbent polymer is sufficiently long, which causes a problem that processing time becomes long.

### Summary of the Invention

In view of such points, one non-limiting and exemplary embodiment provides a used paper diaper processing method and apparatus, in which a used paper diaper is stirred together with a chemical containing divalent metal ions, and dehydration processing is performed after water is removed by lowering a water absorption function of a superabsorbent polymer, so that an amount of water contained in the used paper diaper is lowered and weight is reduced. In the used paper diaper processing method and apparatus, by reducing the weight without separating and disassembling the paper diaper and by implementing in the processing apparatus a series of operations up to taking-out operation of the used paper diaper after the processing, work and hygiene burdens on an operator at a nursing home and the like are reduced without increasing a burden of wastewater processing in a sewage processing facility.

In other words, the non-limiting and exemplary embodiment provides the used paper diaper processing method and apparatus capable of performing a series of operations of reducing the weight of the used paper diaper and storing the used paper diaper in a discharge container without bothering the operator.

Additional benefits and advantages of the disclosed embodiments will be apparent from the specification and Figures. The benefits and/or advantages may be individually provided by the various embodiments and features of the specification and drawings disclosure, and need not all be provided in order to obtain one or more of the same.

In one general aspect, the techniques disclosed here feature: a used paper diaper processing method comprising:
supplying a processing liquid to a processing tank that processes a used paper diaper up to a first water level;
putting the used paper diaper into the processing tank to which the processing liquid is supplied;
performing first stirring processing by rotating an inner tank of the processing tank at a first rotation speed to remove water from the used paper diaper;
additionally supplying water to the processing tank up to a second water level higher than the first water level after performing the first stirring processing;
performing second stirring processing by rotating the inner tank of the processing tank at a second rotation speed lower than the first rotation speed to separate excrement contained in the used paper diaper from the used paper diaper;
discharging the processing liquid from the processing tank after performing the second stirring processing;
dehydrating the used paper diaper processed in the processing tank by rotating the inner tank of the processing tank from which the processing liquid has been discharged; and
taking out the used paper diaper processed and dehydrated in the processing tank from below the processing tank.

In another general aspect, the techniques disclosed here feature: a used paper diaper processing apparatus comprising:
a processing tank that processes a used paper diaper;
a liquid supply unit that supplies a processing liquid to the processing tank;
a liquid discharge unit that discharges the processing liquid from the processing tank; and
a take-out unit that takes out the paper diaper processed in the processing tank below the processing tank,
wherein the processing tank has a cylindrical inner tank that stores the used paper diaper and has a plurality of through holes smaller than the paper diaper on at least either a side surface thereof or a bottom surface thereof, and an outer tank that surrounds the side surface and the bottom surface of the inner tank,
the used paper diaper processing apparatus further comprising:
   a rotation drive unit that rotates the inner tank at at least three different rotation speeds;
   a first water level gauge that measures a first water level in the processing tank;
   a second water level gauge that measures a second water level higher than the first water level in the processing tank; and
   an opening/closing unit that discharges the paper diaper processed in the processing tank from a bottom of the processing tank to the take-out unit,
   wherein the three different rotation speeds of the rotation drive unit include
   a first rotation speed at which first stirring processing is performed by rotating the inner tank of the processing tank to remove water from the used paper diaper,
   a second rotation speed at which second stirring processing is performed by rotating the inner tank of the processing tank at a rotation speed lower than the first rotation speed to separate excrement contained in the used paper diaper from the used paper diaper, and
   a third rotation speed at which the used paper diaper processed in the processing tank is dehydrated by rotating the inner tank of the processing tank from which the processing liquid has been discharged.

According to the used paper diaper processing method and apparatus according to the above aspect of the present disclosure, even when the used paper diaper put into the processing tank floats on a liquid surface, by performing the first stirring processing in which the inner tank of the processing tank is rotated at the first rotation speed at the first water level (or liquid level), the used paper diaper is quickly submerged in the processing liquid. After that, by adding water up to the second water level (or liquid level) and executing the second stirring processing at the second rotation speed lower than the first rotation speed, the processing can be carried out without overflowing the processing liquid from the processing tank. As a result, water contained in a superabsorbent polymer can be efficiently removed, and work and hygiene burdens on an operator can be reduced. In other words, it is possible to perform a series of operations of reducing weight of the used paper diaper and storing it in a discharge container without bothering the operator.

### Brief Description of the Drawings

These and other aspects and features of the present disclosure will become clear from the following description taken in conjunction with the embodiments thereof with reference to the accompanying drawings, in which:
Fig. 1A is a side sectional view showing a configuration of a used paper diaper processing apparatus according to a first embodiment of the present disclosure;
Fig. 1B is a side sectional view showing a configuration of a used paper diaper processing apparatus according to a modification of the first embodiment of the present disclosure;
Fig. 2 is a flowchart showing a used paper diaper processing method according to the first embodiment of the present disclosure;
Fig. 3 is a side sectional view showing a state in which used paper diapers are disposed in a processing tank and first stirring processing is performed in the used paper diaper processing apparatus according to the first embodiment of the present disclosure;
Figs. 4A and 4B are side sectional views of the processing tank each showing a state of a processing liquid when the used paper diapers are disposed in the processing tank and the first stirring processing is performed in the used paper diaper processing apparatus according to the first embodiment of the present disclosure;
Fig. 5 is a side sectional view showing a state in which the used paper diapers are disposed in the processing tank and second stirring processing is performed in the used paper diaper processing apparatus according to the first embodiment of the present disclosure;
Fig. 6 is a side sectional view of the processing tank showing a state of the processing liquid when the used paper diapers are disposed in the processing tank and the second stirring processing is performed in the first embodiment of the present disclosure;
Fig. 7 is a side sectional view showing a state in which an inner tank is rotated at a high speed and dehydration processing is performed in the used paper diaper processing apparatus according to the first embodiment of the present disclosure;
Fig. 8 is a side sectional view showing a state in which a bottom of the processing tank is opened and taking-out operation of the used paper diapers after processing is performed in the used paper diaper processing apparatus according to the first embodiment of the present disclosure;
Fig. 9 is a side sectional view showing a configuration of a used paper diaper processing apparatus according to a second embodiment of the present disclosure;
Fig. 10 is a side sectional view of a processing tank showing a state of a processing liquid when used paper diapers are disposed in the processing tank and first stirring processing is performed in the used paper diaper processing apparatus according to the second embodiment of the present disclosure;
Figs. 11A and 11B are sectional views of a conventional used paper diaper processing apparatus; and
Figs. 12A-12D are sectional views of a conventional used paper diaper processing apparatus.

### Detailed Description

### First embodiment

Hereinafter, a used paper diaper processing apparatus 1 according to an embodiment of the present disclosure will be described in detail with reference to the drawings. In the drawings, the same or corresponding parts are denoted by the same reference numerals and description thereof will not be repeated. Note that, in order to make the explanation easy to understand, a configuration is shown in a simplified or schematic manner, or some constituent members are omitted in the drawings referred to below. Further, a dimensional ratio between the constituent members shown in each drawing does not necessarily indicate an actual dimensional ratio.

### [Overall configuration]

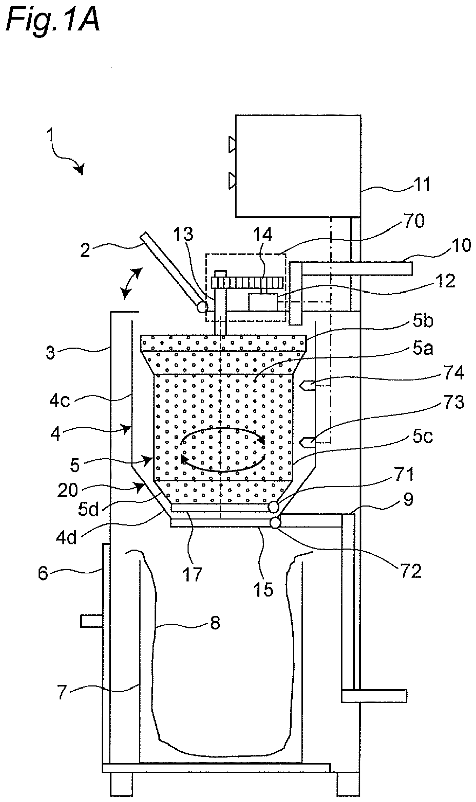

First, an overall configuration of the used paper diaper processing apparatus 1 will be described. Fig. 1A is a side sectional view showing a configuration of the used paper diaper processing apparatus 1 according to the first embodiment of the present disclosure.

The used paper diaper processing apparatus 1 includes at least a processing tank 20, a liquid supply unit 10, a liquid discharge unit 9, and a take-out unit 6. More specifically, the used paper diaper processing apparatus 1 further includes a loading door 2, an apparatus main body 3, a storage container 7, a disposal bag 8, a control apparatus 11, and a rotation drive unit 70.

The processing tank 20 for processing a used paper diaper is disposed in an upper portion of the apparatus main body 3, and includes, for example, a cylindrical outer tank 4 and a cylindrical inner tank 5 that can store a used paper diaper 18. The inner tank 5 is disposed in the outer tank 4.

The inner tank 5 is configured so that an upper portion thereof is an upper conical portion 5b configured as a wide mouth to make it easier to put the used paper diaper 18 thereinto, a middle portion thereof is a cylindrical portion 5c that follows the upper conical portion 5b, and a lower portion thereof is a conical tapered portion 5d that narrows toward a bottom surface from the cylindrical portion 5c.

The outer tank 4 is configured so that an upper to middle portion thereof is a cylindrical portion 4c and a lower portion thereof is a conical tapered portion 4d that narrows toward a bottom surface from the cylindrical portion 4c, as in a case of the conical tapered portion 5d. The outer tank 4 surrounds a side surface and the bottom surface of the inner tank 5.

Inside the outer tank 4, a first water level gauge 73 and a second water level gauge 74a are installed. The first water level gauge 73 detects that a processing liquid 19 has been stored up to a first water level. The second water level gauge 74a detects that the processing liquid 19 has stored up to a second water level that is higher than the first water level. The first water level is a height inside the outer tank 4 in which the first water level gauge 73 is disposed, and when a water level of the processing liquid 19 reaches that height, it is detected by the first water level gauge 73. Similarly, the second water level is a height inside the outer tank 4 in which the second water level gauge 74 is disposed, and when the water level of the processing liquid 19 reaches that height, it is detected by the second water level gauge 74. Of the first water level and the second water level, the second water level is set higher. The first water level gauge 73 and the second water level gauge 74 are connected to the control apparatus 11, and water level detection information of the first water level gauge 73 and water level detection information of the second water level gauge 74 are input thereto and used for rotation control of the rotation drive unit 70.

As an example, the first water level can be at least 1/3 of a height of the inner tank 5, and the second water level can be at least 2/3 thereof.

The loading door 2 is attached to the upper portion of the apparatus main body 3 so as to be openable and closable. The used paper diaper 18 is put into the inner tank 5 by opening the loading door 2.

The outer tank 4 is a container that can store water. Water can be stored by introducing water from the liquid supply unit 10 into the processing tank 20, and a chemical can also be introduced from the liquid supply unit 10 into the processing tank 20. As a result, the processing liquid 19 can be supplied from the liquid supply unit 10 into the processing tank 20. Note that, as will be described in detail later, a processing liquid 19 in which water and a chemical are mixed can be supplied from the liquid supply unit 10 into the processing tank 20.

Further, the liquid in the outer tank 4 is discharged to the outside by using the liquid discharge unit 9. Inside the outer tank 4, the cylindrical inner tank 5 having a plurality of through holes 5a on at least either the side surface or the bottom surface is disposed. Each through hole 5a is smaller than the paper diaper 18 to prevent the paper diaper 18 from falling out of the through hole 5a.

Further, the inner tank 5 is rotatably connected to the rotation drive unit 70. Under the control of the control apparatus 11, the rotation drive unit 70 rotatably drives the inner tank 5 at at least three different rotation speeds (that is, a first rotation speed, a second rotation speed, and a third rotation speed described later). As an example, the rotation drive unit 70 includes a shaft 13 fixed to the inner tank 5 along a rotation axis of the inner tank 5, a belt 14 that engages with the shaft 13 to rotate the shaft 13, and a motor 12 having a rotating shaft to which a gear engaging with the belt 14 is fixed. As a result, it is possible to rotate the inner tank 5 with respect to the outer tank 4 by driving the motor 12 under the control of the control apparatus 11. As an example, the rotation axis of the inner tank 5 can be disposed along a vertical direction.

For example, the rotation drive unit 70 performs the following operation under the control of the control apparatus 11.

The motor 12 performs first stirring processing by rotating the inner tank 5 of the processing tank 20 at the first rotation speed based on the water level detection information of the first water level gauge 73. Thereby, water is removed from the used paper diaper 18.

Further, after the first stirring processing, the motor 12 performs second stirring processing by rotating the inner tank 5 of the processing tank 20 at the second rotation speed lower than the first rotation speed based on the water level detection information of the second water level gauge 74. Thereby, excrement contained in the used paper diaper 18 is separated from the used paper diaper 18.

Further, after the second stirring processing, the motor 12 performs dehydration processing by rotating the inner tank 5 from which the processing liquid 19 has been discharged at a high speed, for example, at the third rotation speed higher than the first rotation speed.

An outer tank bottom 15 and an inner tank bottom 17 can be opened and closed around rotation axes by hinges 71 and 72 as an example of an opening/closing unit with respect to the outer tank 4 and the inner tank 5, respectively. The take-out unit 6 is disposed below the processing tank, that is, in a lower portion of the apparatus main body 3 below the outer tank bottom 15 and the inner tank bottom 17.

A processed paper diaper can be taken out from the take-out unit 6. Inside the take-out unit 6, the storage container 7 to which the disposal bag 8 is attached is placed. The disposal bag 8 is placed immediately below the inner tank bottom 17. By making an opening of the storage container 7 larger than an opening at a bottom of the inner tank 5, the processed paper diaper can be smoothly dropped into the disposal bag 8 of the storage container 7.

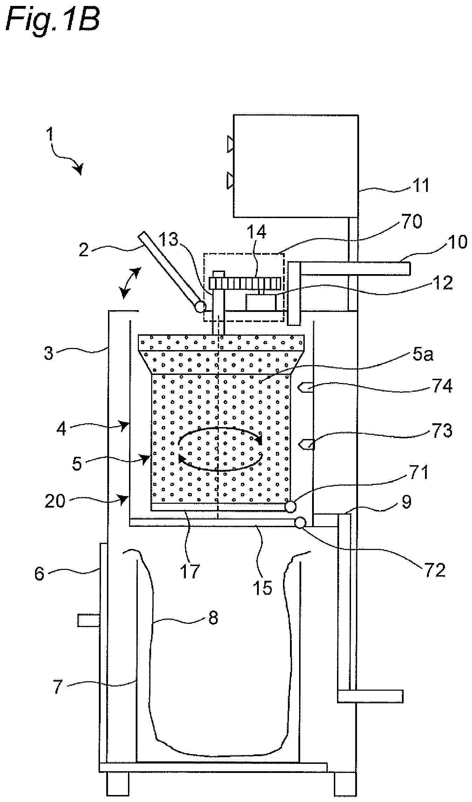

As shown in Fig. 1B, the tapered portions 4d and 5d may not be attached to the lower portions of the outer tank 4 and the inner tank 5. By attaching the tapered portions 4d and 5d, it is possible to reduce diameters of the outer tank bottom 15 and the inner tank bottom 17, respectively, and a space required for opening and closing the hinges 71 and 72 around the rotation axes of the hinges 71 and 72 can be reduced. As a result, more processed paper diapers can be stored in the storage container 7.

### [Operation]

Next, processing operation of the used paper diaper processing apparatus 1 will be described.

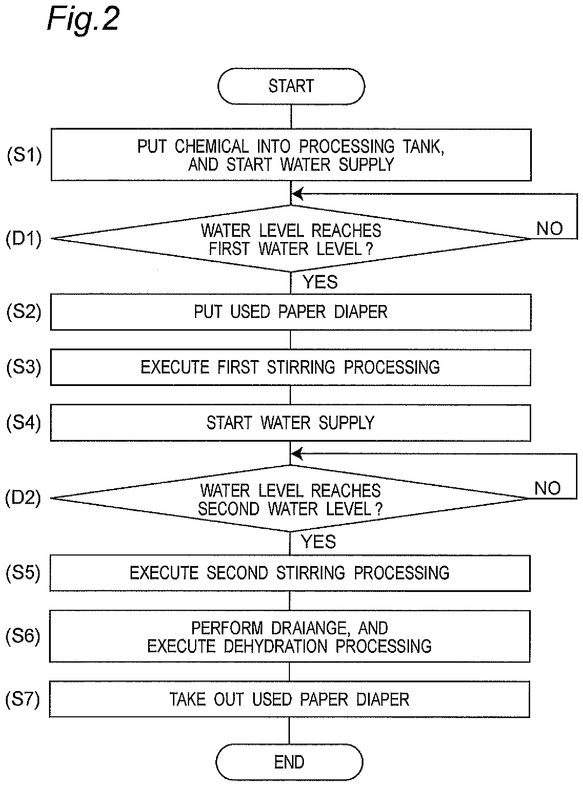

First, an entire processing flow will be described with reference to Fig. 2.

In step S1 of Fig. 2, a chemical for lowering a water absorption function of a superabsorbent polymer contained in the used paper diaper 18 is put into the processing tank 20, and then water supply to the processing tank 20 is started. In the processing tank 20, the chemical and the water are mixed to form the processing liquid 19.

Next, in step D1 of Fig. 2, it is confirmed whether a water level of the processing liquid 19 in the processing tank 20 reaches the first water level, and if the water level in the processing tank 20 does not reach the first water level, the water supply is continued. When the water level in the processing tank 20 reaches the first water level, the water supply is stopped. Whether or not the water level in the processing tank 20 reaches the first water level is confirmed by deciding whether or not information that the processing liquid 19 has been detected by the first water level gauge 73 is input to the control apparatus 11.

Following step D1, the used paper diaper 18 is put into the processing tank 20 in step S2 of Fig. 2.

Next, in step S3 of Fig. 2, the first stirring processing is performed by rotating the inner tank 5 of the processing tank 20 at the first rotation speed.

When the first stirring processing is completed, the water supply to the processing tank 20 is started again in step S4 of Fig. 2.

Next, in step D2 of Fig. 2, it is confirmed whether the water level of the processing tank 20 reaches the second water level, and if the water level in the processing tank 20 does not reach the second water level, the water supply is continued. When the water level in the processing tank 20 reaches the second water level, the water supply is stopped.

After step D2, in step S5 of Fig. 2, the second stirring processing is performed by rotating the inner tank 5 of the processing tank 20 at the second rotation speed lower than the first rotation speed.

After the second stirring processing, drainage is performed in step S6 of Fig. 2, and the dehydration processing is performed by rotating the inner tank 5 of the processing tank 20 at a high speed, that is, at the third rotation speed higher than the first rotation speed.

Finally, in step S7 of Fig. 2, the processed paper diaper is taken out from the processing tank 20.

Next, details of each processing operation will be described.

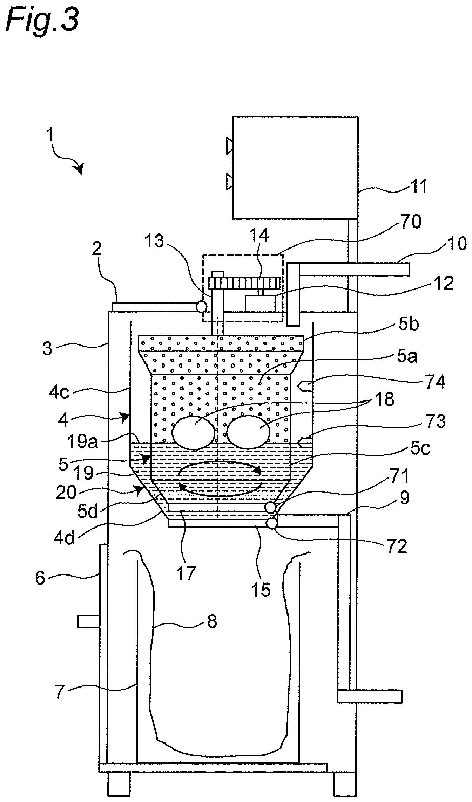

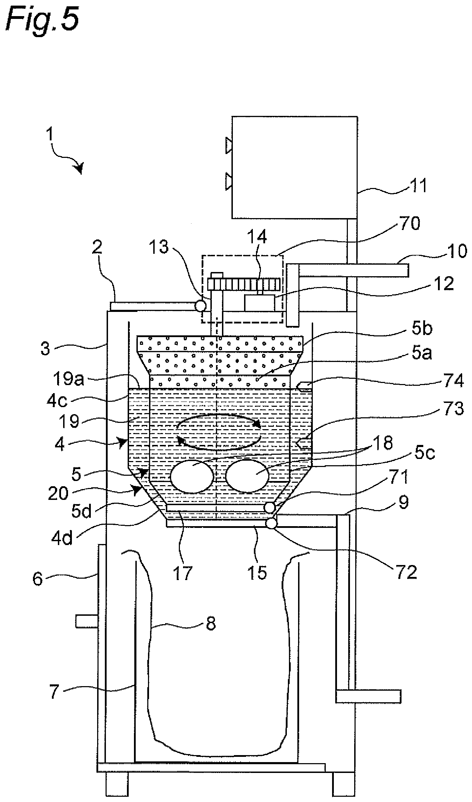

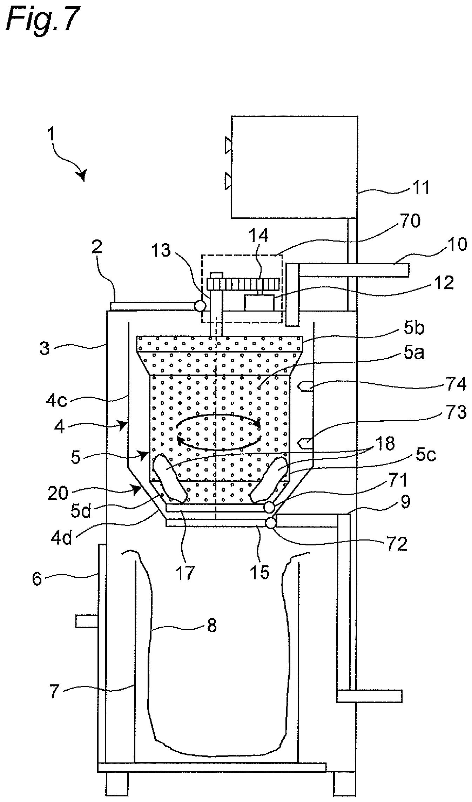

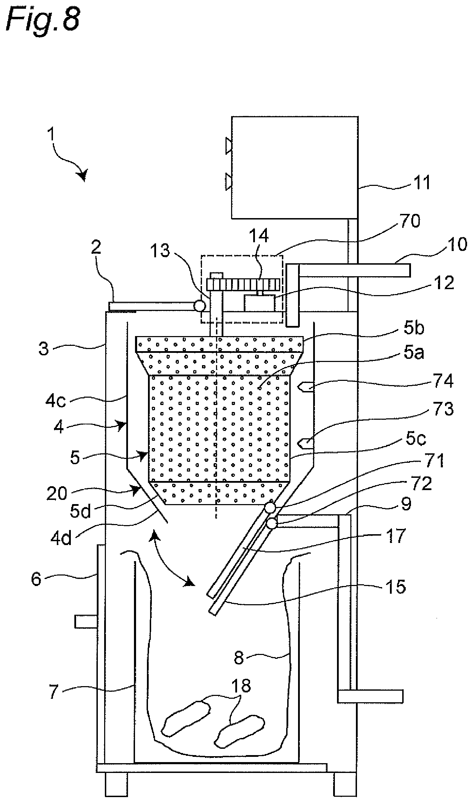

In the following, for convenience of explanation, a state in which the processing liquid is supplied up to the first water level the used paper diapers 18 are put into the inner tank 5, and then the first stirring processing is performed (Fig. 3), a state in which the processing liquid is increased up to the second water level and the second stirring processing is performed (Fig. 5), a state in which the inner tank 5 is rotated at a high speed and the dehydration processing is performed (Fig. 7), and a state in which the outer tank bottom 15 and the inner tank bottom 17 are opened and operation of taking out the used paper diapers 18 after processing to the take-out unit 6 is performed (Fig. 8) will be described separately.

First, in Fig. 3, a chemical for lowering a water absorption function of a superabsorbent polymer is put from the liquid supply unit 10 into the processing tank 20, and then water is started to be supplied from the liquid supply unit 10 to the processing tank 20. The chemical and the water are mixed in the processing tank 20, and the processing liquid 19 is stored in the processing tank 20 (see step S1). As the chemical for lowering the water absorption function of the superabsorbent polymer, a substance containing metal ions can be used as an example, and especially, calcium chloride, lime, or the like containing a divalent metal can be used as an example.

Water is supplied from the liquid supply unit 10 to the processing tank 20 until the control apparatus 11 detects that the processing liquid 19 being at the first water level is detected by the first water level gauge 73 (see step D1).

Next, after the processing liquid 19 is detected by the first water level gauge 73, the used paper diapers 18 are put into the inner tank 5 from the loading door 2 (see step S2). At this time, since the outside of the used paper diaper 18 is composed of a waterproof material sheet that does not allow water to pass through, it may float on a liquid surface 19a of the processing liquid 19.

Next, the motor 12 is rotationally controlled under the control of the control apparatus 11, and the first stirring processing is executed by rotating the inner tank 5 at the first rotation speed (see step S3). Specifically, when the motor 12 rotates at the first rotation speed, the shaft 13 rotates via the belt 14, and the inner tank 5 rotates with respect to the outer tank 4. Thereby, the processing liquid 19 and the used paper diapers 18 are stirred. In this first stirring processing, instead of continuous rotation, the inner tank 5 repeats rotation for a certain period of time, stop, reverse rotation for a certain period of time, and stop or, alternatively, repeats rotation for a certain period of time, stop, and rotation for a certain period of time in the same direction again. It is preferable because the stirring tends to progress.

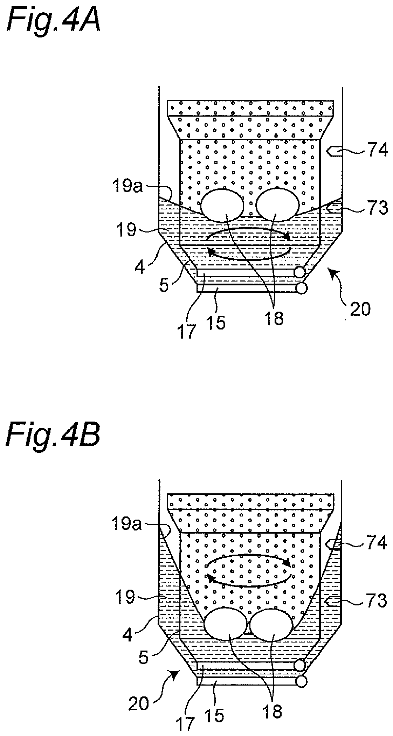

In this step S3, when the used paper diapers 18 put thereinto in step S2 float on the liquid surface 19a of the processing liquid 19, even if the inner tank 5 is rotated at 100 rpm or less, it is rotated while the used paper diapers 18 float on the liquid surface, and the stirring with the processing liquid 19 does not proceed (Fig. 4A). This is because the rotation speed of the inner tank 5 is too small, the liquid surface 19a of the processing liquid 19 slightly rises near an inner wall of the outer tank 4, is almost the same as the liquid surface 19a near a center of the inner tank 5, and is almost flat. On the other hand, when the inner tank 5 is rotated at 160 rpm or less which is higher than 100 rpm, for example, the processing liquid 19 is pressed against the inner wall of the outer tank 4 by centrifugal force, and the liquid surface 19a of the processing liquid 19 near a side surface of the outer tank 4 rises above the liquid surface 19a near the center of the inner tank 5 (Fig. 4B). After that, when the inner tank 5 stops rotating or rotates in a reverse direction to decrease the centrifugal force, a turbulent flow is generated in the processing liquid 19 due to reaction from returning of the risen processing liquid 19. When such a first stirring processing is continued for a while, the turbulent flow causes the processing liquid 19 to permeate into the used paper diapers 18 floating on the liquid surface 19a, and the used paper diapers 18 are likely to be submerged. As a result, the used paper diapers 18 can be quickly processed by the processing liquid 19. Therefore, the first rotation speed can be higher than 100 rpm and 160 rpm or less, and processing time can be about 3 to 15 minutes, for example.

Note that an optimum rotation speed depends on a diameter of the cylindrical inner tank 5, and an optimum value described here is, for example, a value when the diameter is about 400 mm. Optimum processing time depends on concentration of the processing liquid 19. As an example, first stirring time can be 5 minutes, and second stirring time can be 15 minutes. It is possible to exert a better effect in the processing when the second stirring time is longer than the first stirring time.

When the first stirring processing is continued, the superabsorbent polymer of the used paper diaper 18 and, for example, divalent metal ions in the chemical react with each other. Accordingly, water contained in the superabsorbent polymer is removed from the used paper diaper 18, and the removed water is mixed with the processing liquid 19. In the first stirring processing here, the processing liquid 19 and the superabsorbent polymer of the used paper diaper 18 only need to react with each other. It is useful to perform gentle stirring under the control of the control apparatus 11 so that the used paper diaper 18 is not separated and disassembled by the first stirring processing.

By putting the used paper diaper 18 thereinto in a state in which the processing liquid 19 mixed with the chemical is stored in the processing tank 20, it is possible to prevent the used paper diaper 18 from expanding by absorbing water in the inner tank 5. If the used paper diaper 18 is put in a state in which only the water is stored and the processing liquid 19 containing the chemical is not stored, the superabsorbent polymer absorbs the water, and the used paper diaper 18 expands greatly. In this case, an issue that the number of used paper diapers 18 that can be put into the inner tank 5 at a time is limited and an issue that the inner tank 5 must be enlarged occur. On the other hand, when the processing liquid 19 mixed with the chemical is stored in the processing tank 20, the occurrence of these issues can be suppressed.

Next, the second stirring processing will be described with reference to Fig. 5. After the first stirring processing is completed, water is supplied from the liquid supply unit 10 to the processing tank 20 until the control apparatus 11 detects that the processing liquid 19 being at the second water level is detected by the second water level gauge 74 (see steps S4 and D2).

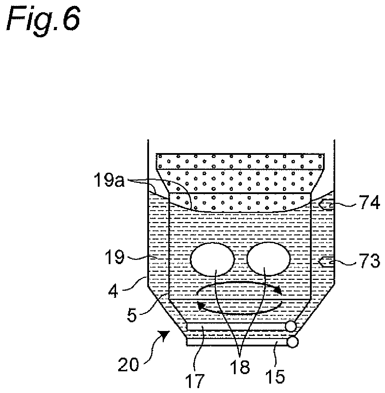

After the processing liquid 19 is detected by the second water level gauge 74, the motor 12 is rotationally controlled under the control of the control apparatus 11 as in the first stirring processing, and the second stirring processing is executed by rotating the inner tank 5 at the second rotation speed (see step S5). When the second rotation speed is increased to more than 100 rpm, the liquid surface 19a of the processing liquid 19 near the side surface of the outer tank 4 rises due to the centrifugal force, and the processing liquid 19 overflows from the processing tank 20. Therefore, the second rotation speed can be, for example, 40 rpm or more and 100 rpm or less. With such a rotation speed, as shown in Fig. 6, the second stirring processing can be performed without overflowing the processing liquid 19. Processing time of the second stirring processing can be, for example, about 3 to 15 minutes. Even in the second stirring processing, an optimum rotation speed depends on the diameter of the cylindrical inner tank 5.

In the second stirring processing, an amount of the processing liquid 19 is larger than that in the first stirring processing, so that an effect of separating excrement contained in the used paper diaper 18 from the used paper diaper 18 is higher. On the other hand, in the first stirring processing, the amount of the processing liquid 19 is smaller than that in the second stirring processing, so that concentration of the chemical for lowering the water absorption function of the superabsorbent polymer is higher than that in the second stirring processing. This makes it easier to remove water from the used paper diaper 18. In other words, the first stirring processing has a high effect of removing water from the superabsorbent polymer, and the second stirring processing has a high effect of separating excrement.

Next, the dehydration processing of the used paper diapers 18 will be described with reference to Fig. 7 (see step S6). Next, after the liquid such as the processing liquid accumulated in the outer tank 4 is drained from the liquid discharge unit 9, the inner tank 5 is rotated at a high speed, that is, at the third rotation speed with respect to the outer tank 4. Thereby, the used paper diapers 18 can be dehydrated, and weight of the used paper diapers 18 can be reduced. Specifically, as an example of the third rotation speed, it is possible to dehydrate at a rotation speed of about 800 to 1300 rpm.

Next, taking-out of the used paper diaper 18 will be described with reference to Fig. 8 (see step S7). When the outer tank bottom 15 and the inner tank bottom 17 are opened via the hinges 71 and 72 in a state in which the dehydration is finished, the used paper diapers 18 fall into the disposal bag 8 installed in the storage container 7. When the used paper diapers 18 are discharged, it can be discharged simply by taking out the take-out unit 6 from the apparatus main body 3 by sliding the take-out unit 6 laterally with respect to the apparatus main body 3, and taking out the disposal bag 8 from the storage container 7.

According to the first embodiment described above, even if the used paper diapers 18 put into the processing tank 20 float on the liquid surface, by performing the first stirring processing in which the inner tank 5 of the processing tank 20 is rotated at the first rotation speed at the first water level, the used paper diapers 18 are quickly submerged in the processing liquid 19. After that, by adding water up to the second water level and executing the second stirring processing at the second rotation speed lower than the first rotation speed, the stirring processing can be performed without overflowing the processing liquid 19 from the processing tank 20. As a result, the water contained in the super absorbent polymer can be efficiently removed.

In addition, a fiber portion of the used paper diaper 18 weight-reduced with a chemical containing metal ions or the like remains without being separated and disassembled in the processing tank 20. Therefore, when the liquid is discharged to a sewer pipe or the like, it is not necessary to introduce an apparatus for removing a fiber component of the used paper diaper 18 by a filter.

Further, the used paper diaper 18 after processing does not need to be taken out directly by an operator from above the inner tank, and can be stored in the disposal bag 8 without bothering the operator. Therefore, work and hygiene burdens on the operator can be reduced.

Hence, it is possible to perform a series of operations of reducing the weight of the used paper diapers 18 and storing the used paper diapers in the discharge container without bothering the operator.

Note that, in the first embodiment, the disposal bag 8 is installed in the storage container 7. However, the used paper diaper 18 may be directly stored in the storage container 7 without installing the disposal bag 8.

In addition, instead of preparing the processing liquid 19 by putting the chemical containing metal ions and the like thereinto after the water is stored in the processing tank 20, a processing liquid 19 in which water and a chemical are mixed may be prepared in advance, and the prepared processing liquid 19 may be directly stored in the processing tank 20.

Further, in order to rotate the inner tank 5, it is possible that the rotating shaft of the motor 12 and the inner tank 5 are directly connected without using the belt 14 and the inner tank 5 is rotationally driven by the motor 12 directly.

### Second embodiment

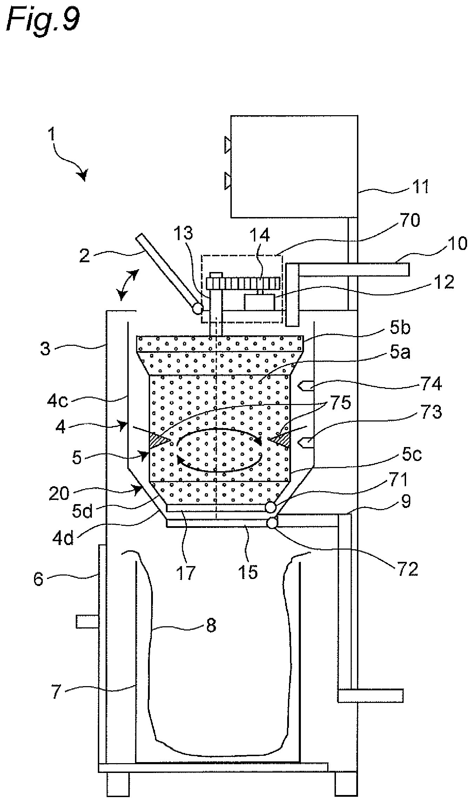

Fig. 9 shows an apparatus configuration of a second embodiment of the present disclosure.

A difference from the first embodiment is that a rectifying protrusion 75 is attached to the inner tank 5.

The rectifying protrusion 75 projects inside and outside the inner tank 5 in a protruding shape and is attached onto a circumference of the inner tank 5 in a donut shape. Specifically, the rectifying protrusion 75 is formed inside the inner tank 5 as a donut-shaped protruding portion 75a protruding toward the center of the inner tank 5 at a height near the first water level, and a longitudinal sectional shape thereof is, for example, an isosceles triangle. Further, the rectifying protrusion 75 is formed outside the inner tank 5 by protruding a flange portion 75b inclined toward the center of the inner tank 5 all around or intermittently.

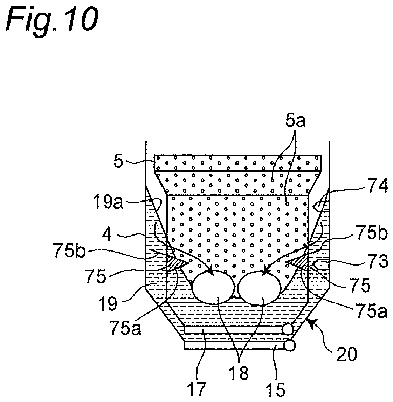

According to such a configuration, the liquid surface 19a of the processing liquid 19 near the side surface of the outer tank 4 rises during the first stirring processing, and then when the inner tank 5 stops rotating or rotates in the reverse direction to reduce the centrifugal force, the risen processing liquid 19 falls. At that time, the processing liquid 19 flows into the inner tank 5 through the through hole 5a by the inclined flange portion 75b of the rectifying protrusion 75 projecting outside the inner tank 5. The inflowing processing liquid 19 is rectified to a center of the inner tank 5 by the rectifying protrusion 75 projecting inside the inner tank 5. The rectified processing liquid 19 falls from above onto the used paper diapers 18 floating on the liquid surface 19a of the processing liquid 19 (Fig. 10). As a result, the processing liquid 19 easily infiltrates the inside of the used paper diapers 18, and the used paper diapers 18 are easily submerged.

According to the configuration of the second embodiment, the used paper diapers 18 floating on the liquid surface can be submerged more efficiently by the rectifying protrusion 75, and processing time can be shortened.

According to the second embodiment described above, in addition to the action and effect of the first embodiment,the processing liquid 19 risen near the side surface of the outer tank 4 during the first stirring processing is rectified to the center of the inner tank 5 by the rectifying protrusion 75, the used paper diapers 18 floating on the liquid surface can be submerged more efficiently, and the processing can be completed in a shorter time.

Although the embodiments of the present disclosure have been described above, the embodiments are only the illustration for implementing the present disclosure. Therefore, the present disclosure is not limited to the above-described embodiments, and can be implemented by appropriately modifying the embodiments without departing from the spirit thereof.

By appropriately combining arbitrary embodiments or modifications of the above various embodiments or modifications, respective effects can be produced. Additionally, combination between embodiments, combination between working examples, or combination between an embodiment(s) and a working example(s) is possible, and combination between characteristics in different embodiments or working examples is possible as well.

The used paper diaper processing method and apparatus according to the above aspects of the present disclosure can remove water from the used paper diaper by lowering a water absorption function of a superabsorbent polymer that absorbs water contained in excrement to remove water by mixing the superabsorbent polymer and a chemical containing divalent metal ions, and can reduce weight by lowering an amount of water contained in the used paper diaper. Moreover, the used paper diaper processing method and apparatus according to the above aspects of the present disclosure does not require an operator to take out the used paper diaper after processing directly from the inner tank. Thereby, the method and apparatus can reduce work and hygiene burdens on the operator and can be used to improve work in an elderly facility or a childcare facility using large amounts of paper diapers.

Although the present disclosure has been fully described in connection with the embodiments thereof with reference to the accompanying drawings, it is to be noted that various changes and modifications are apparent to those skilled in the art. Such changes and modifications are to be understood as included within the scope of the present disclosure as defined by the appended claims unless they depart therefrom.

## Claims

1. A used paper diaper processing method comprising:
supplying a processing liquid to a processing tank that processes a used paper diaper up to a first water level;
putting the used paper diaper into the processing tank to which the processing liquid is supplied;
performing first stirring processing by rotating an inner tank of the processing tank at a first rotation speed to remove water from the used paper diaper;
additionally supplying water to the processing tank up to a second water level higher than the first water level after performing the first stirring processing;
performing second stirring processing by rotating the inner tank of the processing tank at a second rotation speed lower than the first rotation speed to separate excrement contained in the used paper diaper from the used paper diaper;
discharging the processing liquid from the processing tank after performing the second stirring processing;
dehydrating the used paper diaper processed in the processing tank by rotating the inner tank of the processing tank from which the processing liquid has been discharged; and
taking out the used paper diaper processed and dehydrated in the processing tank from below the processing tank.

2. The used paper diaper processing method according to claim 1, wherein
the first stirring processing is processing in which stirring is performed in a state in which an amount of the processing liquid in the inner tank is smaller than that in the second stirring processing and a concentration of a chemical in the processing liquid is higher than that in the second stirring processing to remove water from the used paper diaper, whereas
the second stirring processing is processing in which stirring is performed in a state in which an amount of the processing liquid in the inner tank is larger than that in the first stirring processing to separate excrement contained in the used paper diaper from the used paper diaper.

3. A used paper diaper processing apparatus comprising:
a processing tank that processes a used paper diaper;
a liquid supply unit that supplies a processing liquid to the processing tank;
a liquid discharge unit that discharges the processing liquid from the processing tank; and
a take-out unit that takes out the paper diaper processed in the processing tank below the processing tank,
wherein the processing tank has a cylindrical inner tank that stores the used paper diaper and has a plurality of through holes smaller than the paper diaper on at least either a side surface thereof or a bottom surface thereof, and an outer tank that surrounds the side surface and the bottom surface of the inner tank,
the used paper diaper processing apparatus further comprising:
a rotation drive unit that rotates the inner tank at at least three different rotation speeds;
a first water level gauge that measures a first water level in the processing tank;
a second water level gauge that measures a second water level higher than the first water level in the processing tank; and
an opening/closing unit that discharges the paper diaper processed in the processing tank from a bottom of the processing tank to the take-out unit,
wherein the three different rotation speeds of the rotation drive unit include
a first rotation speed at which first stirring processing is performed by rotating the inner tank of the processing tank to remove water from the used paper diaper,
a second rotation speed at which second stirring processing is performed by rotating the inner tank of the processing tank at a rotation speed lower than the first rotation speed to separate excrement contained in the used paper diaper from the used paper diaper, and
a third rotation speed at which the used paper diaper processed in the processing tank is dehydrated by rotating the inner tank of the processing tank from which the processing liquid has been discharged.

4. The used paper diaper processing apparatus according to claim 3, wherein
in the first stirring processing, stirring processing is performed in a state in which an amount of the processing liquid in the inner tank is smaller than that in the second stirring processing, and a concentration of a chemical in the processing liquid is higher than that in the second stirring processing to remove water from the used paper diaper, whereas
in the second stirring processing, stirring processing is performed in a state in which an amount of the processing liquid in the inner tank is larger than that in the first stirring processing to separate excrement contained in the used paper diaper from the used paper diaper.

5. The used paper diaper processing apparatus according to claim 3, wherein a rectifying protrusion that projects inside and outside the inner tank in a protruding shape is attached onto a circumference of the inner tank in an annular shape.

6. The used paper diaper processing apparatus according to claim 4, wherein a rectifying protrusion that projects inside and outside the inner tank in a protruding shape is attached onto a circumference of the inner tank in an annular shape.
